# EUROPÄISCHE PATENTANMELDUNG

(11) **EP 2 594 812 A1**
(43) Veröffentlichungstag der Anmeldung: **22.05.2013**
(21) Anmeldenummer: 12190311.6
(22) Anmeldetag: 29.10.2012
(51) Int. Cl.: F16B 35/04, F16B 37/12, F16B 41/00

(54) **Zweiteilige Schraube**

(30) Priorität: 16.11.2011 DE 102011086491
(71) Anmelder: BSS Baumann Sicherheitssysteme GmbH, 78315 Radolfzell (DE)
(72) Erfinder: Siraky, Josef, 78166 Donaueschingen (DE); Kuttruff, Markus, 78166 Donaueschingen (DE)
(74) Vertreter: Patentanwälte Westphal, Mussgnug & Partner

(57) **Zusammenfassung**

Die Erfindung betrifft eine Schraube (100,200,300,600) mit einem Schraubenkopf (111,211,311,611), einem dem Schraubenkopf (111,211,311,611) gegenüberliegenden Schraubenende (122,222, 322,622) und einem äußeren Schraubengewinde (121,221,321,621) zum Einschrauben der Schraube (100,200,300,600) in ein Material, wobei die Schraube (100,200,300,600) mindestens zwei über eine lösbare Verbindung miteinander verbundene Teile (110,120,210, 220,310,320,610,620) aufweist, wobei der Schraubenkopf (111,211,311,611) an einem anderen Teil (110,210,310, 610) angeordnet ist als das äußere Schraubengewinde (121,221, 321,621) und das Schraubenende (122,222,322,622), ein Werkzeug (400,500) zum vollständigen Entfernen einer solchen Schraube (100,200,300,600), wobei das Werkzeug (400,500) Mittel zum Herstellen einer drehfesten Verbindung zu dem das äußere Schraubengewinde (121,221,321,621) aufweisenden Teil (120,220, 320,620) der Schraube (100,200,300,600) aufweist und ein Verfahren zum Entfernen einer solchen Schraube (100,200,300,600) mit einem derartigen Werkzeug (400,500) mit den Schritten Entfernen des den Schraubenkopf (111,211,311,611) aufweisenden Teils (110,210,310,610) der Schraube (100,200,300,600), Herstellen einer drehfesten Verbindung zwischen dem Werkzeug und dem das äußere Gewinde (121,221,321,621) aufweisenden Teil der Schraube (100,200,300,600), und Herausschrauben des das äußere Gewinde (121,221,321,621) aufweisenden Teils der Schraube (100,200,300,600) mit dem Werkzeug (400,500).

## Beschreibung

Die Erfindung betrifft eine Schraube mit den Merkmalen des Oberbegriffs des Patentanspruchs 1, insbesondere eine Stulpschraube mit den Merkmalen des Oberbegriffs des Patentanspruchs 1, ein Werkzeug zum vollständigen Entfernen einer derartigen Schraube mit den Merkmalen des Oberbegriffs des Patentanspruchs 7 und ein Verfahren zum Entfernen einer derartigen Schraube mit einem derartigen Werkzeug.

Als Stulpschrauben werden insbesondere die Schrauben bezeichnet, die der Fixierung des Profilzylinders eines Schlosses im Schlosskasten dienen. Diese Fixierung, die üblicherweise durch das Schraubenende der Stulpschraube erfolgt, ist notwendig, um zu verhindern, dass der Zylinder einfach aus dem Schloss herausgezogen oder -gedrückt werden kann, was dazu führen würde, dass das Schloss auch ohne einen passenden Schlüssel geöffnet werden kann.

Angesichts dieser erheblichen Relevanz der Stulpschraube für die Sicherheit, die ein Schloss bietet, ist es nicht verwunderlich, dass man bestrebt ist, ein unbefugtes Entfernen der Stulpschraube so kompliziert wie möglich zu gestalten. Die Standardmaßnahme, die angewendet wird, um dieses Ziel zu erreichen, besteht darin, die Bohrung, in die die Stulpschraube eingeschraubt wird, an einer Stelle anzuordnen, die bei geschlossener Tür unzugänglich ist, was dazu führt, dass Stulpschrauben neben einem Gewinde in der Regel als Senkschraube ausgestaltet sind, deren Schraubenkopf im in ein Material vollständig eingeschraubten Zustand bündig mit einer Materialoberfläche abschließt.

Dies allein stellt aber eine unzureichende Sicherheitsmaßnahme dar, solange diese Senkschraube bei geöffneter Tür schnell und einfach entfernt werden kann, da in diesem Fall ein kurzes Ablenkungsmanöver einem Ganoven die notendige Zeit verschaffen kann, um die Schraube zu entfernen und dann zu einem geeigneten Zeitpunkt in das mit dem nun herausnehmbaren Schloss nicht mehr effektiv gesicherte Objekt eindringen zu können. Aus dem Stand der Technik ist es daher bekannt, von den gängigen Standards der Formgebung der Vertiefungen im Schraubenkopf, in die ein Schraubwerkzeug zum Entfernen der Schraube eingreift, wie z.B. Schlitz, Kreuzschlitz oder Innensechskant, abzuweichen und somit die Verwendung eines Spezialwerkzeugs zu erzwingen, das weniger weit verbreitet ist und gegebenenfalls auch nur an einen beschränkten Personenkreis abgegeben wird. Letztlich wird auch auf diese Weise aber lediglich eine geringe Verringerung des Risikos der Entfernung der Stulpschraube erzielt.

Die Aufgabe der Erfindung besteht darin, eine Schraube, deren Entfernung aus einer geöffneten Tür bei ihrer Verwendung als Stulpschraube nur mit erhöhtem Aufwand möglich ist, die aber dennoch beim Einbau einfach in die Tür einzubringen ist, sowie ein Werkzeug zur vollständigen Entfernung einer solchen Schraube und ein Verfahren zur vollständigen Entfernung einer solchen Schraube mit einem derartigen Werkzeug bereitzustellen.

Diese Aufgabe wird gelöst durch eine Schraube mit den Merkmalen des Patentanspruchs 1 und ein Werkzeug zum vollständigen Entfernen einer derartigen Schraube mit den Merkmalen des Patentanspruchs 7 und ein Verfahren zum Entfernen einer derartigen Schraube mit einem derartigen Werkzeug mit den Merkmalen des Patentanspruchs 9. Vorteilhafte Ausgestaltungen der Erfindung sind Gegenstand der Unteransprüche.

Die erfindungsgemäße Schraube weist einen Schraubenkopf, ein dem Schraubenkopf gegenüberliegendes Schraubenende und ein äußeres Schraubengewinde zum Einschrauben der Schraube in ein Material auf. Als Schraubenkopf im Sinne dieser Patentschrift wird dabei der Bestandteil der Schraube angesehen, der die Mittel zur Erzeugung eines Formschlusses mit dem zum Einschrauben der Schrauben verwendeten Werkzeug, also z.B. einen Kreuzschlitz, einen Schlitz oder eine sechskant- oder sternförmige Vertiefung, aufweist. Das Schraubenende ist der Teil der Schraube, der beim Einschrauben der Schraube in ein Material am tiefsten in das Material eindringt. Das äußere Schraubengewinde ist das Gewinde der Schraube, das beim Einschrauben der Schraube in ein Material mit dem Material wechselwirkt. Unter einem Material wird dabei jeweils auch ein etwaig vorgesehenes Gegengewinde verstanden.

Erfindungswesentlich ist, dass die Schraube mindestens zwei über eine lösbare Verbindung miteinander verbundene Teile aufweist, wobei der Schraubenkopf an einem anderen Teil angeordnet ist als das äußere Schraubengewinde und das Schraubenende. Durch das Vorsehen einer auf diese Weise aus mehreren lösbar miteinander verbundenen Teilen aufgebauten Schraube wird die Möglichkeit geschaffen, dass sich bei einem Versuch des Herausdrehens der Schraube am Schraubenkopf die Verbindung zwischen den Teilen löst, so dass der das äußere Schraubengewinde aufweisende Teil, der die eigentliche Sicherung des Schlosszylinders gewährleistet, nicht mit herausgedreht wird. Dies ist insbesondere dann der Fall, wenn eine Verbindung vorgesehen wird, die sich nur beim Drehen in der Richtung, in die die Schraube beim Herausdrehen gedreht wird, löst. Diese Richtung ist durch die Gestaltung des äußeren Schraubengewindes vorgegeben.

Besonders sicher kann eine derartige Schraube gestaltet werden, wenn das Teil, welches das äußerer Schraubengewinde und das Schraubenende aufweist, eine durchgehende Bohrung besitzt, in der bei Verwendung der Schraube ein Spannmittel zum Verspannen des äußeren Schraubengewindes angeordnet ist. Damit kann, insbesondere wenn das Teil, welches das äußere Schraubengewinde und das Schraubenende aufweist einen ausgehend vom Schraubenende geschlitzten Abschnitt besitzt, dieses Teil so verkeilt werden, dass sein Herausdrehen nicht mehr möglich ist.

Eine besonders einfache Alternative zur Bereitstellung einer solchen lösbaren Verbindung wird realisiert, wenn die Verbindung zwischen dem Teil der Schraube, das den Schraubenkopf aufweist, und mindestens einem weiteren Teil der Schraube eine innere Schraubverbindung ist, wobei das Gewinde der inneren Schraubverbindung eine größere Steigung aufweist als das äußere Schraubengewinde. Es sind aber auch andere Arten lösbarer Verbindungen denkbar, z.B. auch eine magnetische Verbindung, die beim Ansetzen eines Spezialwerkzeugs mit entsprechender magnetischer Spitze verstärkt wird, so dass sich die notwendige Drehfestigkeit zum gemeinsamen Herausschrauben der Teile der Schraube ergibt.

Der Begriff "Schraubverbindung" wird dabei für eine Verbindung zwischen zwei Teilen verwendet, bei der ein männliches Teil, das ein Gewinde aufweist, in verbundenem Zustand zumindest teilweise in ein weibliches Teil, das eine Öffnung mit einem darin angeordneten Gegengewinde aufweist, eingeschraubt ist. Die Schraubverbindung wird als "innere Schraubverbindung" bezeichnet, um klarzustellen, dass es sich um eine Verbindung zwischen zwei Teilen der Schraube handelt, die insbesondere in der Regel bei der zusammengebauten Schraube in deren Inneren angeordnet und daher im Gegensatz zum äußeren Schraubengewinde nicht sichtbar ist.

Als Folge der größeren Steigung des Gewindes der inneren Schraubverbindung löst sich dieses bereits beim Anlegen eines Drehmoments am Schraubenkopf, das noch nicht ausreicht, um das äußere Schraubengewinde in Drehung zu versetzen. Besonders bewährt haben sich in der Praxis innere Schraubengewinde, bei denen das Gewinde der inneren Schraubverbindung mit einer mindestens um einen Faktor drei größeren Gewindesteigung ausgestaltet ist als das äußere Schraubengewinde.

Alternativ oder zusätzlich ist es auch möglich, als Verbindung zwischen dem Teil der Schraube, das den Schraubenkopf aufweist und mindestens einem weiteren Teil der Schraube eine innere Schraubverbindung vorzusehen und das äußere Schraubengewinde möglichst schwergängig zu gestalten.

Gestaltet man die innere Schraubverbindung so, dass der männliche Teil der inneren Schraubverbindung an dem Teil, das den Schraubenkopf aufweist, angeordnet ist, und der weibliche Teil der inneren Schraubverbindung an dem Teil, das das Schraubenende und das Außengewinde aufweist, angeordnet ist, erhält man eine besonders kostengünstig herzustellende Schraube. In diesem Fall kann als Teil mit dem Schraubenkopf eine übliche Schraube verwendet werden, deren Außengewinde dann das Gewinde des männlichen Teils der inneren Schraubverbindung bildet, während der das Schraubenende und das Außengewinde der Stulpschraube aufweisende Teil der Schraube z.B. durch einen Abschnitt einer Gewindestange gebildet werden kann, in die eine Bohrung mit eingeschnittenem Innengewinde eingebracht ist, die den weiblichen Teil der inneren Schraubverbindung bildet. Gestaltet man die innere Schraubverbindung hingegen so, dass der weibliche Teil der inneren Schraubverbindung an dem Teil, das den Schraubenkopf aufweist, und der männliche Teil der inneren Schraubverbindung an dem Teil, das das Schraubenende und das äußere Schraubengewinde aufweist, angeordnet ist, ergibt sich eine zusammengesetzte Schraube, bei der ein Werkzeug zum Entfernen des das Schraubenende und das äußere Schraubengewinde enthaltenden Teils der Schraube durch Verklemmen des männlichen Teils der inneren Schraubverbindung besonders fest mit diesem in Verbindung gebracht werden kann. Ein konkretes Beispiel für diese Vorgehensweise wird weiter unten ausführlich beschrieben.

Besonders dann, wenn Maßnahmen getroffen wurden, um ein schwergängiges äußeres Schraubengewinde bereitzustellen, kann ein derart verbesserter Kontakt zwischen Werkzeug und dem Teil Schraube mit Schraubenende und äußerem Schraubengewinde wichtig sein.

Eine weitere vorteilhafte Ausgestaltung der Erfindung sieht vor, dass an der Seite des das äußere Schraubengewinde aufweisenden Teils, welche, wenn die Teile der Schraube miteinander verbunden sind, dem Schraubenende gegenüber liegt, mindestens eine Ausstülpung oder Ausnehmung angeordnet ist, mittels derer eine formschlüssige Verbindung zu einem Werkzeug herstellbar ist. Wie die im vorigen Absatz beschriebene Ausgestaltung dient auch diese Maßnahme dazu, die Drehfestigkeit der Verbindung zwischen diesem Teil der Schraube und einem Werkzeug zum Entfernen dieses Teils zu erhöhen und dadurch seine zuverlässige Entfernung zu ermöglichen.

Das erfindungsgemäße Werkzeug zum vollständigen Entfernen einer erfindungsgemäßen Schraube zeichnet sich dadurch aus, dass das Werkzeug Mittel zum Herstellen einer drehfesten Verbindung zu dem das äußere Schraubengewinde aufweisenden Teil der Schraube aufweist. Eine drehfeste Verbindung im Sinne dieser Patentschrift zeichnet sich dadurch aus, dass sie einen höheren Widerstand gegen das Verdrehen von Werkzeug und dem das äußere Schraubengewinde aufweisenden Teil der Schraube relativ zueinander bietet als der Widerstand gegen das Herausdrehen des äußeren Schraubengewindes gegenüber dem es aufnehmenden Material.

In einer vorteilhaften Weiterbildung eines solchen Werkzeugs sind die Mittel zum Herstellen einer drehfesten Verbindung als Spannmittel, insbesondere Innenschrauben, ausgebildet, die so angeordnet sind, dass sie eine Verspannung von Gewinde und Gegengewinde von Werkzeug und einem Teil der Schraube in dem Gewindebereich, der die größere Steigung aufweist, bewirken können. Dadurch wird es auf einfache Weise ermöglicht, das benötigte Losbrechmoment im angeschraubten Zustand bereitzustellen.

Das erfindungsgemäße Verfahren zum Entfernen einer erfindungsgemäßen Schraube mit einem erfindungsgemäßen Werkzeug umfasst die Schritte Entfernen des Teils der Schraube, das den Schraubenkopf aufweist, Herstellen einer drehfesten Verbindung zwischen dem Werkzeug und dem das äußere Gewinde aufweisenden Teil der Schraube, und Herausschrauben des Teils der Schraube, das das äußere Gewinde aufweist, mit dem Werkzeug.

In einer wegen der dadurch erzielten besonderen Sicherheit bevorzugten Weiterbildung des Verfahrens wird erst dadurch, dass zwischen dem Schritt des Entfernens des den Schraubenkopf aufweisenden Teils der Schraube und dem Schritt des Herstellens einer drehfesten Verbindung zwischen dem Werkzeug und dem das äußere Gewinde aufweisenden Teil der Schraube eine Verspannung des das äußere Gewinde aufweisenden Teils der Schraube gelöst wird, ein Entfernen des das äußere Gewinde aufweisenden Teils der Schraube ermöglicht.

Die Erfindung wird nachfolgend anhand von Figuren, die Ausführungsbeispiele zeigen, näher erläutert. Es zeigen:
- Fig. 1a:: eine dreidimensionale, teilweise aufgeschnittene Darstellung einer zweiteiligen Schraube gemäß einer ersten Ausgestaltung der Erfindung,
- Fig. 1b:: einen Schnitt durch eine Schraube gemäß einer Variante der ersten Ausgestaltung der Erfindung,
- Fig. 2a:: die Einzelbestandteile einer zweiteiligen Schraube gemäß einer zweiten Ausgestaltung der Erfindung,
- Fig. 2b:: die aus den Einzelbestandteilen gemäß Figur 2a zusammengesetzte Schraube,
- Fig. 3a:: die Einzelbestandteile einer zweiteiligen Schraube gemäß einer dritten Ausgestaltung der Erfindung,
- Fig. 3b:: die aus den Einzelbestandteilen gemäß Figur 3a zusammengesetzte Schraube,
- Fig. 3c:: eine Aufsicht auf die Seite des das äußere Schraubengewinde aufweisenden Teils aus Figur 3a, welche, wenn die Teile der Schraube miteinander verbunden sind, dem Schraubenende gegenüber liegt,
- Fig. 4:: eine erste Ausgestaltung eines Werkzeugs zum vollständigen Entfernen einer erfindungsgemäßen Schraube,
- Fig. 5:: eine dreidimensionale, teilweise aufgeschnittene Darstellung einer zweiten Ausgestaltung eines Werkzeugs zum vollständigen Entfernen einer erfindungsgemäßen Schraube, und
- Fig. 6:: eine dreidimensionale, teilweise aufgeschnittene Darstellung einer dreiteiligen Schraube gemäß einer vierten Ausgestaltung der Erfindung.

In den Figuren werden für gleiche Bestandteile derselben Ausführungsform der Erfindung identische Bezugszeichen verwendet, soweit nichts anderes erwähnt ist. Die Einzelmerkmale der unterschiedlichen Ausführungsformen sind frei kombinierbar, soweit sie sich nicht widersprechen.

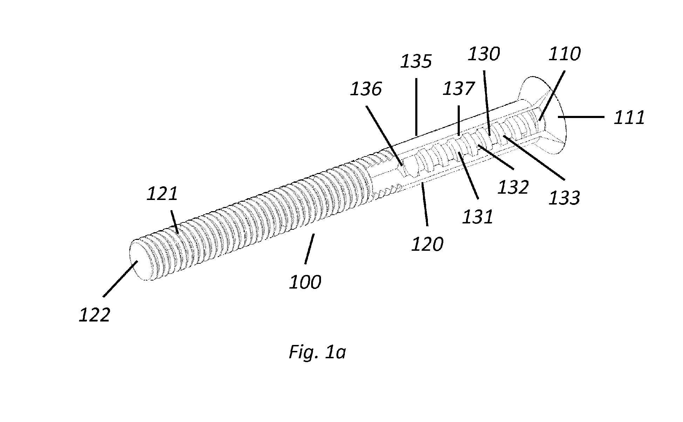

Figur 1a zeigt in einer dreidimensionalen, teilweise aufgeschnittenen Darstellung eine Schraube 100 gemäß einer ersten Ausführungsform der Erfindung mit einem Schraubenkopf 111, einem äußeren Schraubengewinde 121 und einem Schraubenende 122. Die Schraube 100 besteht aus einem Teil 110, an dem der Schraubenkopf 111 angeordnet ist und einem Teil 120, an dem das äußere Schraubengewinde 121 und das Schraubenende 122 angeordnet sind, also insgesamt aus zwei Teilen 110,120.

Die beiden Teile 110,120 sind über eine innere Schraubverbindung 130 miteinander verbunden. Die innere Schraubverbindung 130 wird von einem männlichen Teil 131, bestehend aus einem zylindrischen Abschnitt 132 mit darauf aufgesetztem Gewinde 133 und einem weiblichen Teil 135, bestehend aus einer zylindrischen Bohrung 136 und einem darin eingeschnittenen Gegengewinde 137 gebildet. Natürlich ist, wie von Schrauben allgemein bekannt ist, grundsätzlich auch die nicht dargestellte Verwendung eines konisch zulaufenden Abschnitts für den männlichen Teil 131 und einer entsprechenden, konischen Ausnehmung für den weiblichen Teil 135 möglich.

Es wird im Zusammenhang mit Figur 1a insbesondere auf die Unterschiede zwischen dem äußeren Schraubengewinde 121 und dem am männlichen Teil 131 der inneren Schraubverbindung 130 vorgesehenen Gewinde 133 hingewiesen. Die Steigung des Gewindes 133 ist größer als die Steigung des äußeren Schraubengewindes 121, wodurch sich das Gewinde 133 bereits beim Wirken eines kleineren Drehmoments drehen lässt, während sich das äußere Schraubengewinde 121 noch nicht drehen lässt. Dieser Effekt wird weiter dadurch verstärkt, dass die Windungen des Gewindes 133 deutlich gröber ausgeführt sind als die Windungen des äußeren Schraubengewindes 121.

Daraus ergibt sich, dass beim Versuch, die Schraube 100 aus einem sie aufnehmenden Material herauszuschrauben, zunächst die innere Schraubverbindung 130 aufgeschraubt wird, so dass das Teil 110 mitsamt dem Schraubenkopf 111 entfernt wird, während das Teil 120 mit äußerem Schraubengewinde 121 und Schraubenende 122 im Material zurückbleibt, so dass bei einer Verwendung als Stulpschraube auch die Sicherung eines nicht dargestellten Schlosszylinders gewährleistet bleibt. Die Schraube 100 ist dabei als Sicherungsschraube nicht erkennbar, und beim Einschrauben auf das Teil 110 bleibt gewährleistet, dass sichdas Gewinde 121 bis zum Anschlag des Senkkopfes drehen lässt und dass das zum Befestigen nötige Drehmoment aufgebracht werden kann.

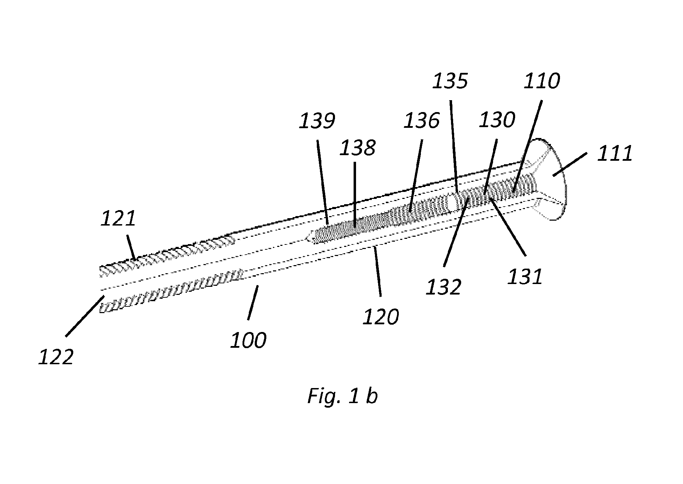

Die in Figur 1b dargestellte Variante der zweiteiligen Schraube 100 unterscheidet sich von der in Figur 1a dargestellten zweiteiligen Schraube 100 dadurch, dass konzentrisch zur zylindrischen Bohrung 136 eine zweite Bohrung 138 mit einem geringeren Durchmesser als dem der zylindrischen Bohrung 136 angeordnet ist, in der ein gegenläufiges Gewinde 139 angeordnet ist, das die entgegengesetzte Drehrichtung wie das äußere Schraubengewinde 121 sowie Gewinde 133 und Gegengewinde 137 der inneren Schraubverbindung 130 hat. Wenn z.B., wie normalerweise üblich, das äußere Schraubengewinde 121 sowie Gewinde 133 und Gegengewinde 137 der inneren Schraubverbindung 130 als Rechtsgewinde ausgestaltet sind, wäre das gegenläufige Gewinde 139 als Linksgewinde auszuführen.

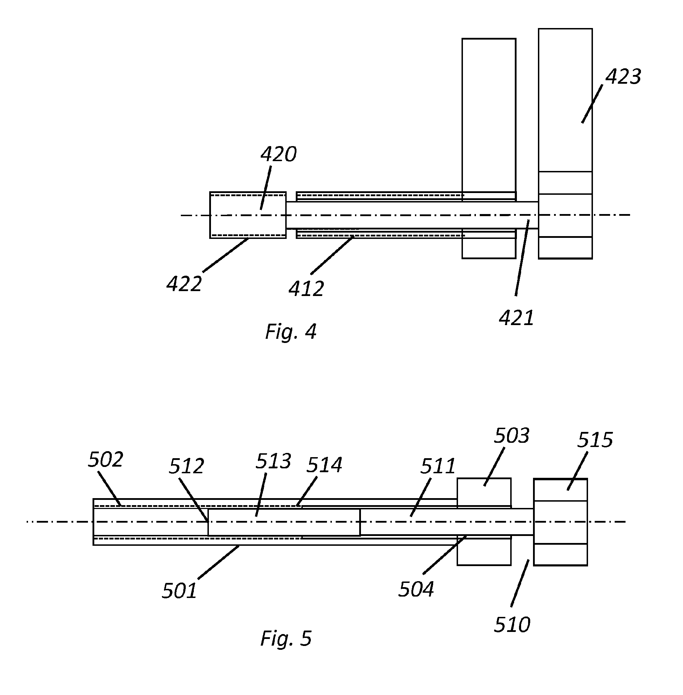

Dies ermöglicht es, statt eines Werkzeugs, wie es beispielsweise der Figur 4 zu entnehmen ist, einfach eine Gewindestange oder Schraube mit einem entsprechenden Gegengewinde zum Entfernen des Teils 120 der zweiteiligen Schraube 100 zu verwenden. Diese kann in das Gewinde 139 bis zu einem Anschlag eingedreht werden. Wird dann weiter in Eindrehrichtung der Gewindestange oder Schraube ein Drehmoment angelegt, führt dies zum Herausdrehen des Teils 120 der zweiteiligen Schraube 100.

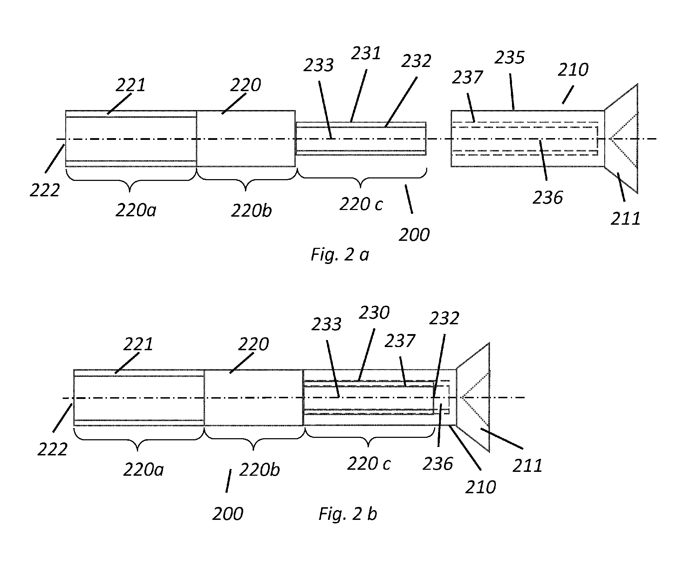

Eine zweite Ausführungsform einer erfindungsgemäßen zweiteiligen Schraube 200 mit einem Schraubenkopf 211, einem äußeren Schraubengewinde 221 und einem Schraubenende 222, ist in den Figuren 2a und 2b dargestellt, wobei Figur 2a die beiden Teile 210,220 der zweiteiligen Schraube 200 voneinander getrennt und Figur 2b die beiden Teile 210,220 miteinander verbunden darstellt.

Auch bei dieser Ausführungsform sind die beiden Teile 210,220 über eine innere Schraubverbindung 230 miteinander verbunden, im Gegensatz zur Ausführungsform gemäß Figur 1a und deren Variante gemäß Figur 1b ist hier aber der männliche Teil 231, bestehend aus einem zylindrischen Abschnitt 232 mit darauf aufgesetztem Gewinde 233, an dem Teil 220 der Schraube 200 angeordnet, das auch das äußere Schraubengewinde 221 und das Schraubenende 222 aufweist, und zwar insbesondere so, dass es sich koaxial zur Mittelachse der Schraube in Richtung auf den Schraubenkopf 211 hin erstreckt.

Der Teil 220 der Schraube 200 weist, wie in Figur 2a besonders gut zu erkennen ist, ausgehend vom Schraubenende 222 einen ersten Abschnitt 220a auf, der das äußere Schraubengewinde 221 trägt, an den sich ein zweiter Abschnitt 220b anschließt, der kein Gewinde, sondern eine glatte Oberfläche aufweist, auf welchen dann ein dritter Abschnitt 220c folgt, der durch den männlichen Teil 231 der inneren Schraubverbindung 230 gebildet wird.

Es wird angemerkt, dass eine Variante einer Ausgestaltung des Teils 220 mit drei Abschnitten 220a,220b,220c auf einfache und günstig herzustellende Weise ausgeführt werden kann, die zu einer dreiteilige Schraube führt, wenn man konzentrisch zwei Abschnitte von Gewindestangen mit unterschiedlichem Durchmesser und unterschiedlicher Gewindesteigung an einander gegenüberliegenden Stirnflächen verbindet und den Abschnitt 220b durch Aufschieben einer Hülse mit angepasstem Innen- und Außendurchmesser realisiert.

Das Vorsehen des zweiten, unstrukturierten Abschnitts 220b ist insbesondere bei langen Schrauben zweckmäßig, um die Notwendigkeit, das äußere Schraubengewinde 221, das Gewinde 233 des männlichen Teils 231 und das Gegengewinde 237 bereitzustellen, auf möglichst kurze Abschnitte der Schraube 200 zu beschränken, was eine günstigere Fertigung erlaubt.

Dementsprechend ist der weibliche Teil 235 der inneren Schraubverbindung 230, bestehend aus einer zylindrischen Bohrung 236 und einem darin eingeschnittenen Gegengewinde 237, an dem Teil 210 der Schraube 200 angeordnet, das den Schraubenkopf 211 aufweist.

Wie in den Figuren 2a und 2b deutlich dargestellt ist, ist auch bei dieser Ausführungsform der Erfindung die Steigung des Gewindes 233 größer als die Steigung des äußeren Schraubengewindes 221, wodurch sich das Gewinde 233 bereits beim Wirken eines kleineren Drehmoments als des zum Drehen des äußeren Schraubengewindes 221 benötigten Drehmoments drehen lässt.

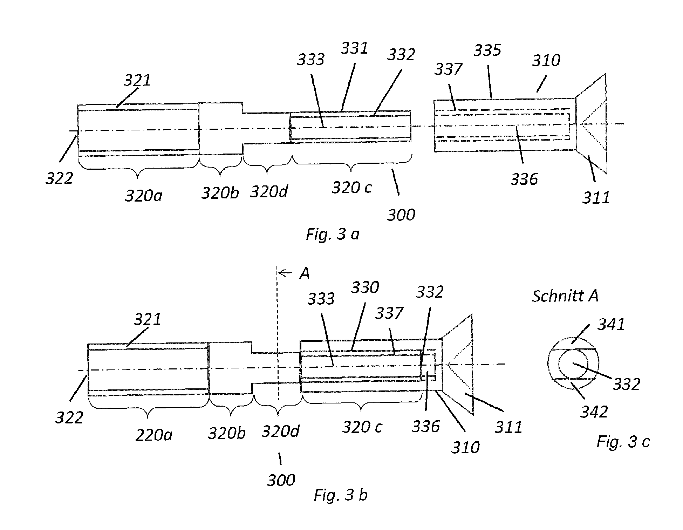

Eine dritte Ausführungsform einer erfindungsgemäßen zweiteiligen Schraube 300 ist in den Figuren 3a bis 3c dargestellt, wobei Figur 3a die beiden Teile 310,320 der zweiteiligen Schraube 300 voneinander getrennt und Figur 3b die beiden Teile 310,320 miteinander verbunden darstellt. Dabei unterscheidet sich die Schraube 300 gemäß der dritten Ausführungsform nur dadurch von der Schraube 200 gemäß der zweiten Ausführungsform, dass das Teil 320 mit dem äußerem Schraubengewinde 321 und Schraubenende 322 einen vierten Abschnit 320d aufweist, der zwischen den Abschnitten 320b und 320c angeordnet ist. Wie in Figur 3c besonders gut zu erkennen ist, weist dieser Abschnitt zwei Ausnehmungen 341,342 auf, die geeignet sind, einen Formschluss mit einem Werkzeug herzustellen, das zu den Ausnehmungen 341,342 komplementäre Ausstülpungen aufweist, was einfacher herzustellen ist als z.B. das in Figur 5 dargestellte Werkzeug.

Es sollte allerdings darauf hingewiesen, dass ein einfacher Aufbau der zusätzlichen benötigten Werkzeuge, wie er sich aus den in Figuren 1b bzw. 3a und 3b dargestellten Varianten der Erfindung ergibt, ambivalent zu sehen ist, weil dies dazu beiträgt, dass diese Zusatzwerkzeuge weite Verbreitung finden.

Wie auch aus jeder der Figuren 1a bis 3b zu entnehmen ist, ist die innere Schraubverbindung 130,230,330 zweckmäßigerweise (aber nicht zwingend) so gestaltet, dass die Teile 110,120, 210,220,310,320 der Schraube 100,200,300 im zusammengesetzten Zustand eine Oberfläche bilden, die an der Grenze bzw. an der Übergangsstelle zwischen den Teilen 110,120,210,220,310,320 im Wesentlichen eben verläuft, so dass keine signifikante Stufe entsteht. Ebenso ist es zweckmäßig, die jeweiligen Gewinde konzentrisch zur gemeinsamen Schraubenachse anzuordnen.

Figur 4 zeigt eine Ausgestaltung eines Werkzeugs 400 zum Entfernen des das Schraubenende 122 aufweisenden Teils 120 einer Schraube 100 mit einem Aufbau, wie er in Figur 1a dargestellt ist. Das Werkzeug 400 weist eine Innenschraube 410 auf, die einen sechskantigen Kopf 411 und ein an das Gegengewinde 137 angepasstes Gewinde 412 aufweist. Im formschlüssigen Kontakt im Hinblick auf eine Drehbewegung um die Längsachse der Innenschraube 410 mit deren sechskantigem Kopf 411 ist ein Spann-Hebelarm 413 angeordnet, der auch durch einen Ring- oder Maulschlüssel realisiert werden kann und mit dem ein Drehmoment auf die Innenschraube 410 ausgeübt werden kann. Ebenfalls denkbar ist die Verwendung einer Zange.

Durch eine die Innenschraube 410 durchsetzende Öffnung 414 ist ein relativ zur Öffnung 414 drehbarer, profilierter Schaft 421 einer Arbeitsschraube 420 geführt, deren Gewinde 422 ebenfalls an das Gegengewinde 137 angepasst ist. In im Hinblick auf Drehbewegungen um die Längsachse der Arbeitsschraube 420 formschlüssigem Kontakt zum profilierten Schaft 421 steht ein Arbeits-Hebelarm 423, der bei entsprechender Profilgestaltung des profilierten Schafts 421 ebenfalls auch durch einen Ring- oder Maulschlüssel oder als Zange realisiert werden kann.

Zum Entfernen der Schraube 100 wird zunächst der Teil 110 mit einem Standard-Werkzeug abgeschraubt, während der Teil 120 wegen der unterschiedlichen Gewindesteigungen an seiner Position verharrt. Zur Entfernung des verbleibenden Teils 120 der Schraube 100 wird zunächst das Gewinde 422 der Arbeitsschraube 420 in den weiblichen Teil 135 der inneren Schraubverbindung 130 eingeschraubt. Anschließend wird auf den profilierten Schaft 421 die Innenschraube 410 mit der sie durchsetzenden Öffnung 414 aufgesteckt und deren Gewinde 412 ebenfalls in den weiblichen Teil 135 der inneren Schraubverbindung 130 eingeschraubt, und zwar so, dass sie das Gewinde 422 der Arbeitsschraube 420 mit dem Gegengewinde 137 verspannt. Dies führt dazu, dass eine am Arbeits-Hebelarm 423 angreifende Kraft ein Drehmoment erzeugt, dass auf das Teil 120 der Schraube 100 übertragen wird, so dass diese bei entsprechender Richtung der Kraft aus dem sie umgebenden Material herausgeschraubt wird.

Figur 5 zeigt eine Ausführungsform eines Werkzeugs 500, welches für eine Ausgestaltung der Schraube 200 gemäß Figur 2a und 2b Anwendung findet. Das Werkzeug 500 weist eine Hülse 501 mit einem an das Gewinde 233 des männlichen Teils 231 des inneren Gewindes 230 der Schraube 200 angepassten, auf der Innenseite der Hülse 501 angeordneten Gegengewinde 502 und einem Sechskantkopf 503 auf, der eine auf der Mittelachse der Hülse 501 liegende Öffnung 504 besitzt. Durch die Öffnung 504 ist ein Schaft 511 einer Innenschraube 510 so geführt, dass der Schaft 511 in der Öffnung 504 drehbar ist. Am bei bestimmungsgemäßer Verwendung des Werkzeugs 500 dem Schraubenende 222 zugewandten Ende 512 des Schafts 511 ist ein Gewindeabschnitt 513 vorgesehen, welcher ein Gewinde 514 aufweist, das ebenfalls an das Gewinde 233 des männlichen Teils 231 des inneren Gewindes 230 der Schraube 200 angepasst ist. Im dem Ende 512 gegenüberliegenden Endbereich des Schafts 511 ist dieser mit einem Sechskantkopf 515 versehen. Grundsätzlich kann statt der Sechskantköpfe 503,515 auch ein anderes Mittel zur Herstellung eines Formschlusses mit einem an diesen Stellen angreifenden Werkzeug verwendet werden.

Zum Entfernen der Schraube 200 wird zunächst der Teil 210 mit einem Standard-Werkzeug abgeschraubt, während der Teil 220 wegen der unterschiedlichen Gewindesteigungen an seiner Position verharrt. Zur Entfernung des verbleibenden Teils 220 der Schraube 200 wird die Hülse 501 auf den männlichen Teil 231 der inneren Schraubverbindung 230 aufgeschraubt. Danach wird die Innenschraube 510 in die Hülse 501 hineingeschraubt, so dass der männliche Teil 231 mit dem Gegengewinde 502 verspannt wird. Durch Drehen am Sechskantkopf 503 kann dann der Teil 220 der Schraube 200 entfernt werden.

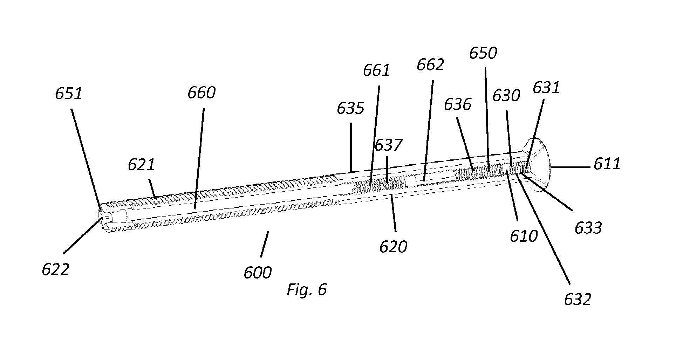

Figur 6 zeigt in einer dreidimensionalen, teilweise aufgeschnittenen Darstellung eine Schraube 600 gemäß einer vierten Ausführungsform der Erfindung mit einem Schraubenkopf 611, einem äußeren Schraubengewinde 621 und einem Schraubenende 622. Die Schraube 600 besteht aus einem Teil 610, an dem der Schraubenkopf 611 angeordnet ist, einem von einer Bohrung 650 durchsetzten Teil 620, an dem das äußere Schraubengewinde 621 und das Schraubenende 622 angeordnet sind, und einem Spannmittel 660 also insgesamt aus drei Teilen 610,620 und 660.

Die beiden Teile 610,620 sind über eine innere Schraubverbindung 630 miteinander verbunden. Die innere Schraubverbindung 630 wird von einem männlichen Teil 631, bestehend aus einem zylindrischen Abschnitt 632 mit darauf aufgesetztem Gewinde 633 und einem weiblichen Teil 635, bestehend aus einer zylindrischen Bohrung 636 und einem darin eingeschnittenen Gegengewinde 637 gebildet. Wesentlich für die Funktionsweise der in Figur 6 gezeigte Ausführungsform der Erfindung ist, dass der weibliche Teil 635 länger ist als der männliche Teil 631 und dass die zylindrische Bohrung 636 ein Abschnitt der das Teil 620 durchsetzenden Bohrung 650 ist. Ausgehend vom Schraubenende 622 durchsetzen Schlitze 651 die Wandung eines Abschnitts der Bohrung 650, die sich im geschlitzten Bereich zum Schraubenende 622 hin verjüngt.

Das Spannmittel 660 ist als Spreizdorn mit einem Gewindeabschnitt 661 und einem zur Herstellung des Formschlusses mit einem nicht dargestellten Werkzeug ausgelegten Spreizdornkopf 662 auf, wobei der Gewindeabschnitt 661 passend zum Gegengewinde 637 ausgeführt ist. Wenn ein Formschluss zwischen Spreizdornkopf 662 und Werkzeug hergestellt ist, kann somit durch Drehen des Werkzeugs der Spreizdorn in die Richtung des Schraubenendes 622 oder vom Schraubenende weg bewegt werden. Gelangt das dem Spreizdornkopf 662 gegenüberliegenden Ende des Spannmittels 660 in den geschlitzten Bereich, wird dieser auseinandergedrückt und verspannt das Teil 620 mit dem dieses umgebenden Material.

Daraus ergibt sich, dass beim Versuch, die Schraube 600 aus einem sie aufnehmenden Material herauszuschrauben, zunächst die innere Schraubverbindung 630 aufgeschraubt wird, so dass das Teil 610 mitsamt dem Schraubenkopf 611 entfernt wird, während das Teil 620 mit äußerem Schraubengewinde 621 und Schraubenende 622 im Material zurückbleibt, so dass bei einer Verwendung als Stulpschraube auch die Sicherung eines nicht dargestellten Schlosszylinders gewährleistet bleibt. Die Schraube 600 ist dabei als Sicherungsschraube nicht erkennbar, und beim Einschrauben auf das Teil 610 bleibt gewährleistet, dass sichdas Gewinde 621 bis zum Anschlag des Senkkopfes drehen lässt und dass das zum Befestigen nötige Drehmoment aufgebracht werden kann.

Zum Entfernen des den Schlosszylinder sichernden Teils 620 der Schraube 600 muss daher nach dem Abschrauben des Teils 610 zunächst das Spannmittel 660 mit einem ersten Werkzeug aus dem verspannenden in den nicht verspannenden Zustand gebracht werden, ehe mit einem zweiten Werkzeug das den Schlosszylinder sichernde Teil 620 entfernt werden kann.

### Bezugszeichenliste

- 100,200,300,600: Schraube
- 110,120,210,220,310,320, 610,620: Teil der Schraube
- 111,211,311,611: Schraubenkopf
- 121,221,321,621: äußeres Schraubengewinde
- 122,222,322,622: Schraubenende
- 130,230,330,630: innere Schraubverbindung
- 131,231,331,631: männlicher Teil
- 132,232,332,632: zylindrischer Abschnitt
- 133,233,333,633: Gewinde
- 135,235,335,635: weiblicher Teil
- 136,236,336,636: zylindrische Bohrung
- 137,237,337,637: Gegengewinde
- 138: zweite Bohrung
- 139: gegenläufiges Gewinde
- 220a,220b,220c: Abschnitt
- 320a,320b,320c,320d: Abschnitt
- 341,342: Ausnehmungen
- 400,500: Werkzeug
- 410,510: Innenschraube
- 411: Kopf
- 412,422,514: Gewinde
- 413: Spann-Hebelarm
- 414: Öffnung
- 420: Arbeitsschraube
- 421,511: Schaft
- 423: Arbeits-Hebelarm
- 501: Hülse
- 502: Gegengewinde
- 503,515: Sechskantkopf
- 504: Öffnung
- 512: Ende
- 513: Gewindeabschnitt
- 650: Bohrung651 Schlitz
- 660: Spannmittel
- 661: Gewindeabschnitt
- 662: Spreizdornkopf

## Patentansprüche

1. Schraube (100,200,300) mit einem Schraubenkopf (111,211, 311), einem dem Schraubenkopf (111,211,311) gegenüberliegenden Schraubenende (122,222,322) und einem äußeren Schraubengewinde (121,221,321) zum Einschrauben der Schraube (100,200,300) in ein Material,
**dadurch gekennzeichnet, dass** die Schraube (100,200,300) mindestens zwei über eine lösbare Verbindung miteinander verbundene Teile (110,120,210, 220,310,320) aufweist, wobei der Schraubenkopf (111,211,311) an einem anderen Teil (110,210,310) angeordnet ist als das äußere Schraubengewinde (121,221, 321) und das Schraubenende (122,222,322).

2. Schraube (600) nach Anspruch 1,
**dadurch gekennzeichnet, dass** das Teil (620), welches das äußerer Schraubengewinde (621) und das Schraubenende (622) aufweist, eine durchgehende Bohrung (650) aufweist, in der bei Verwendung der Schraube ein Spannmittel (660) zum Verspannen des äußeren Schraubengewindes (621) angeordnet ist.

3. Schraube (100,200,300) nach Anspruch 1,
**dadurch gekennzeichnet, dass** die Verbindung zwischen dem Teil (110,210,310) der Schraube (100,200,300), der den Schraubenkopf (111,211,311) aufweist, und mindestens einem weiteren Teil (120,220,320) der Schraube (100,200,300) eine innere Schraubverbindung (130,230,330) ist, wobei das Gewinde der inneren Schraubverbindung (130,230,330) eine größere Steigung aufweist als das äußere Schraubengewinde (121,221,321).

4. Schraube (100) nach Anspruch 3,
**dadurch gekennzeichnet, dass** der männliche Teil (131) der inneren Schraubverbindung (130) an dem Teil (110), das den Schraubenkopf (111) aufweist, angeordnet ist.

5. Schraube (200,300) nach Anspruch 3,
**dadurch gekennzeichnet, dass** der weibliche Teil (235,335) der inneren Schraubverbindung (230,330) an dem Teil (210,310), das den Schraubenkopf (211,311) aufweist, angeordnet ist.

6. Schraube (300) nach einem der vorstehenden Ansprüche,
**dadurch gekennzeichnet, dass** an der Seite des das äußere Schraubengewinde (311) aufweisenden Teils, welche, wenn die Teile (310,320) der Schraube (300) miteinander verbunden sind, dem Schraubenende (312) gegenüber liegt, mindestens eine Ausstülpung oder Ausnehmung (341,342) angeordnet ist, mittels derer eine formschlüssige Verbindung zu einem Werkzeug herstellbar ist.

7. Werkzeug (400,500) zum vollständigen Entfernen einer Schraube (100,200,300) nach einem der vorstehenden Ansprüche,
**dadurch gekennzeichnet, dass** das Werkzeug (400,500) Mittel zum Herstellen einer drehfesten Verbindung zu dem das äußere Schraubengewinde (121,221, 321) aufweisenden Teil (120,220,320) der Schraube (100, 200,300) aufweist.

8. Werkzeug (400,500) nach Anspruch 7,
**dadurch gekennzeichnet, dass** die Mittel zum Herstellen einer drehfesten Verbindung zu dem das äußere Schraubengewinde (121,221, 321) aufweisenden Teil (120,220,320) der Schraube (100, 200,300) Spannmittel, insbesondere Innenschrauben sind.

9. Verfahren zum Entfernen einer Schraube (100,200,300,600) nach einem der Ansprüche 1 bis 6 mit einem Werkzeug (400,500) nach Anspruch 7oder 8 mit den Schritten Entfernen des den Schraubenkopf (111,211,311,611) aufweisenden Teils (110,210,310,610) der Schraube (100,200,300, 600),
Herstellen einer drehfesten Verbindung zwischen dem Werkzeug (400,500) und dem das äußere Gewinde (121,221,321, 621) aufweisenden Teil (120,220,320,602) der Schraube (100,200,300,600), und
Herausschrauben des das äußere Gewinde (121,221,321,621) aufweisenden Teils der Schraube (100,200,300,600) mit dem Werkzeug (400,500).

10. Verfahren nach Anspruch 9,
**dadurch gekennzeichnet, dass** zwischen dem Schritt des Entfernens des den Schraubenkopf (611) aufweisenden Teils (610) der Schraube (600) und dem Schritt des Herstellens einer drehfesten Verbindung zwischen dem Werkzeug (400,500) und dem das äußere Gewinde (621) aufweisenden Teil (620) der Schraube (600) eine Verspannung des das äußere Gewinde (621) aufweisenden Teils (620) der Schraube (600) gelöst wird.
